Europäisches Patentamt

European Patent Office

Office européen des brevets

(19)

(11) Numéro de publication: **0 508 875 B1**

## (12) FASCICULE DE BREVET EUROPEEN

(45) Date de publication de fascicule du brevet: **14.12.94**

(51) Int. Cl.⁵: **F16L 9/08**, E03F 3/04, B28B 21/56, E02D 29/10

(21) Numéro de dépôt: **92400955.8**

(22) Date de dépôt: **06.04.92**

(54) **Elément préfabriqué tubulaire.**

(30) Priorité: **11.04.91 FR 9104445**

(43) Date de publication de la demande:
**14.10.92 Bulletin 92/42**

(45) Mention de la délivrance du brevet:
**14.12.94 Bulletin 94/50**

(84) Etats contractants désignés:
**ES GB IT PT**

(56) Documents cités:
**FR-A- 1 562 901**
**FR-A- 2 634 856**
**GB-A- 17 447**
**US-A- 2 261 912**

(73) Titulaire: **SOCIETE DES TUYAUX BONNA**
**91, rue du Faubourg Saint-Honoré**
**F-75365 Paris Cédex 08 (FR)**

(72) Inventeur: **Leblanc, François**
**47, rue des Suisses**
**F-92000 Nanterre (FR)**
Inventeur: **Brocart, Jean-Claude**
**3, allée du Clos du Château**
**F-78570 Chateloup les Vignes (FR)**

(74) Mandataire: **Le Brusque, Maurice et al**
**Cabinet Harlé et Phélip**
**21, rue de la Rochefoucauld**
**F-75009 Paris (FR)**

Rank Xerox (UK) Business Services
(3.10/3.09/3.3.3)

**Description**

La présente invention concerne un élément tubulaire préfabriqué plus spécialement prévu pour la construction d'une conduite ou canalisation enterrée dans une tranchée.

On sait que les canalisations enterrées sont généralement constituées d'éléments tubulaires en béton armé placés bout à bout et emboîtés les uns dans les autres. Chaque élément comprend un fût limité par une paroi latérale tubulaire et est muni à ses extrémités de moyens de liaison avec les éléments adjacents, par exemple, des abouts ayant des formes mâle et femelle permettant un emboîtement avec interposition d'un joint étanche.

De telles canalisations, qui sont utilisées, par exemple, pour l'assainissement ou d'autres applications, peuvent avoir des diamètres très variés et leur constitution dépend des dimensions et de l'utilisation prévue. En particulier, on utilise couramment des tuyaux en béton armé qui présentent l'avantage d'une fabrication simple et économique et qui permettent en outre de couvrir une gamme de diamètres extrêmement étendue allant de quelques dizaines de centimètres à plusieurs mètres.

Il existe plusieurs façons de réaliser des tuyaux en béton armé.

Dans un mode de réalisation particulièrement simple, le tuyau est coulé verticalement, dans un moule comprenant un mandrin intérieur et un coffrage externe, et dans lequel est placée une cage d'armature en acier comportant des barres longitudinales parallèles à l'axe et des cerces circulaires, généralement enroulées en hélice, l'espace annulaire inférieur étant fermé par une pièce d'extrémité étanche. Après durcissement du béton, le tuyau peut être décoffré.

D'autres méthodes peuvent être utilisées, par exemple par centrifugation.

Généralement, et pour la plupart des applications, on donne aux tuyaux une section circulaire qui présente de nombreux avantages.

On sait, en effet, que la paroi circulaire est plus économique puisqu'elle donne le plus faible périmètre pour la plus grande section de passage.

Par ailleurs, la forme circulaire est celle qui résiste le mieux aux pressions extérieures et permet un calcul simple des contraintes appliquées et de la résistance de la paroi. De plus, la réalisation d'un moule circulaire ne pose pas de problèmes particuliers et il en est de même du ferraillage qui peut être réalisé de façon simple et économique par simple bobinage dans une "cageuse" et dont le centrage à l'intérieur de la paroi est facile.

En outre, dans le cas le plus fréquent où une telle canalisation souterraine sert à la circulation de fluides, la section circulaire présente les meilleures conditions d'écoulement.

Enfin, une section circulaire facilite la réalisation des joints d'étanchéité.

Le tuyau rond à section circulaire est donc le plus généralement employé, mais d'autres sections ont été, parfois, envisagées.

Le document FR 2.634.856 décrit, par exemple, un élément constitutif de conduit présentant une face interne polygonale de façon à ménager quatre zones d'épaisseurs renforcées positionnées l'une au sommet, une autre à la base et les deux autres latéralement au niveau des reins du conduit. Cependant, la face externe est toujours circulaire.

On a aussi proposé, dans le document US-A-2.261.912 de réaliser des éléments tubulaires à section ovale présentant, par conséquent, deux axes de symétrie de longueurs différentes, le grand axe de l'ovale étant vertical de façon que le sommet et la base présentent une courbure maximale. En outre, l'épaisseur de la paroi varie de façon continue entre un maximum au sommet et un minimum sur les côtés. Ce profil de section particulier est prévu pour augmenter la résistance du conduit et éviter les fissurations.

Mais il arrive aussi que la section circulaire ne soit pas appropriée au site de construction pour des questions d'encombrements.

Par exemple, pour assurer un écoulement libre des liquides, il faut suivre une pente imposée entre deux niveaux de départ et d'arrivée. Cependant, le diamètre des tuyaux est choisi en fonction de la section de passage à assurer et il faut en outre respecter une hauteur minimale entre le niveau de la génératrice supérieure du tuyau et le niveau du terrain. Or il arrive que ce dernier, par exemple au passage d'une chaussée, se trouve placé trop bas et impose un abaissaient localisé de la conduite.

De plus, le tuyau étant enterré, généralement, dans une tranchée, il arrive que l'on ne puisse pas creuser celle-ci au-delà d'une certaine profondeur, par exemple parce que l'on rencontre un terrain rocheux entraînant des frais excessifs ou bien, en site urbain, lorsque l'on doit passer au-dessus d'autres canalisations ou galeries placées à un niveau plus profond. Pour résoudre de tels problèmes on préfère parfois adopter une section rectangulaire qui permet de diminuer la hauteur des tuyaux en augmentant la largeur, de façon à conserver sensiblement la même capacité hydraulique.

2

EP 0 508 875 B1

Il arrive aussi, en particulier en site urbain, que la canalisation passe dans un endroit resserré qui oblige à limiter la largeur de la fouille et, par conséquent, celle du tuyau. En outre, dans certains cas spécifiques (galerie de visite, égoût, gaine technique, etc...), de telles canalisations doivent permettre le passage d'un homme pour une visite technique, ce qui impose une hauteur minimale.

Dans ces cas, également, il peut être intéressant de remplacer les tuyaux circulaires par des éléments à section rectangulaire de largeur inférieure à la hauteur.

Cependant, le remplacement de tuyaux circulaires par des éléments à section rectangulaire présente un certain nombre d'inconvénients. En particulier, la réalisation de l'armature est plus compliquée et, la résistance mécanique d'un élément à section rectangulaire étant moindre, on peut être amené à augmenter l'épaisseur de la paroi et à renforcer le ferraillage. C'est pourquoi, lorsqu'une partie de la canalisation doit avoir une section rectangulaire, on préfère souvent la réaliser directement dans le sol par bétonnage en place, mais un tel mode de réalisation est évidemment plus onéreux et beaucoup plus long que la pose d'éléments préfabriqués.

L'invention apporte une solution à l'ensemble de ces problèmes grâce à des éléments tubulaires préfabriqués d'un type nouveau qui permettent, notamment, de s'adapter aux conditions d'encombrement en hauteur ou en largeur du sous-sol sans présenter les inconvénients des cadres rectangulaires.

L'invention concerne donc, d'une façon générale, des éléments tubulaires en béton armé pour la construction d'une conduite ou canalisation enterrée, qui sont coulés dans un moule limité par un mandrin interne et par un coffrage externe, et comportant un fût tubulaire limité par une paroi latérale ayant une surface interne et une surface externe symétriques par rapport à deux plans perpendiculaires entre eux et passant par un axe longitudinal, au moins la surface interne présentant, en section transversale à l'axe, un profil globalement ovale ayant deux axes inégaux, respectivement un grand axe A et un petit axe B.

Conformément à l'invention, la surface externe de la paroi latérale présente, en section transversale à l'axe, un profil polygonal à au moins huit côtés, respectivement deux côtés parallèles au grand axe A écartés l'un de l'autre d'une distance Y, deux côtés parallèles au petit axe B écartés l'un de l'autre d'une distance X et au moins quatre côtés inclinés par rapport aux dits axes, les écartements X et Y entre les deux côtés de chaque paire étant différents, de façon que chaque élément préfabriqué présente deux possibilités de pose sur une surface plane avec des encombrements différents en hauteur et en largeur.

De façon particulièrement avantageuse, le profil interne, en section droite, suit sensiblement une ellipse passant par quatre sommets I, III, V, VII situés sur les deux plans de symétrie et à tangentes parallèles aux côtés correspondants du profil externe et par au moins quatre points diagonaux II, IV, VI, VIII situés entre lesdits plans de symétrie et à tangentes parallèles aux côtés inclinés, lesdits huit points étant écartés de distances de même ordre des côtés correspondants du profil externe, de façon que la paroi latérale de l'élément ait, sur toute sa périphérie, une épaisseur sensiblement uniforme.

L'invention couvre également un procédé de réalisation d'un élément préfabriqué par coulée d'une matière moulable telle que du béton dans un moule limité par un coffrage externe et par un mandrin interne, l'élément tubulaire ainsi coulé comportant un fût tubulaire ayant une surface interne et une surface externe coffrées respectivement sur le mandrin interne et sur le coffrage externe et symétriques par rapport à deux plans perpendiculaires entre eux et passant par un axe longitudinal, au moins la surface interne présentant, en section transversale à l'axe, un profil globalement ovale ayant deux axes inégaux, respectivement un grand axe A et un petit axe B, dirigés respectivement suivant les deux plans de symétrie.

Conformément à l'invention, le coffrage externe est constitué d'au moins huit panneaux plans délimitant une surface prismatique à section droite polygonale, de telle sorte que la surface externe de l'élément moulé présente deux grandes bases parallèles au grand axe du profil interne, ayant une largeur L et écartées l'une de l'autre d'une distance Y, deux petites bases parallèles au petit axe B, ayant une largeur l et écartées l'une de l'autre d'une distance X et quatre pans coupés inclinés par rapport aux dits axes, les distances X, Y, entre les bases parallèles étant différentes.

De préférence, pour déterminer les profils en section droite du mandrin interne et du coffrage externe, on choisit tout d'abord les dimensions A du grand axe et B du petit axe du profil interne en fonction de la capacité hydraulique à obtenir et de l'encombrement dont on dispose dans au moins l'une des deux directions verticale et horizontale, compte tenu de l'épaisseur de béton à donner à la paroi, on détermine alors les écartements X, Y des faces planes perpendiculaires aux deux plans de symétrie, puis le positionnement optimal des pans coupés permettant de ménager une épaisseur déterminée et sensiblement constante de la paroi latérale en conservant une largeur minimale de la surface d'assise compatible avec la résistance de la surface de pose et les conditions de stabilité au non-renversement.

Généralement, le profil en section droite de la surface interne sera une ligne courbe continue, de préférence elliptique, mais on peut aussi lui donner la forme d'une ligne polygonale à au moins huit côtés.

3

De façon particulièrement avantageuse, le rapport du grand axe au petit axe du profil interne elliptique de la surface interne peut aller de 1,3 à 2.

De préférence, la surface externe de la paroi latérale aura une section droite octogonale, dont les quatre côtés inclinés font un angle compris entre 30° et 50° avec la direction du grand axe de l'ellipse.

Un avantage important de l'invention réside dans le fait qu'il est possible de définir à l'avance des gammes modulaires d'éléments préfabriqués permettant de couvrir différentes sections de passage, en utilisant un nombre limité de moules.

A cet effet, après avoir défini une gamme de sections elliptiques $S_1$, $S_2$, $S_3$ ... d'aires différentes, ayant pour grand axe, respectivement, $A_1$, $A_2$, $A_3$ ... et pour petit axe, respectivement, $B_1$, $B_2$, $B_3$ ..., on réalise au moins deux modèles d'éléments ayant, respectivement, pour sections $S_1$, $S_2$, à l'intérieur d'un même moule, ce dernier comprenant un coffrage externe à section droite octogonale limité par huit parois verticales et un mandrin interne à section droite sensiblement elliptique, et l'on passe du type $S_1$ de section minimale à un type $S_2$ de section supérieure par élargissement des parois de coffrage d'au moins certaines des faces latérales externes.

On peut notamment, grâce à des panneaux additionnels, élargir seulement les parois de coffrage de la grande et de la petite base, tout en conservant, d'une section à l'autre, la même largeur et la même orientation des parois de coffrage des pans coupés.

De préférence, pour réaliser une gamme modulaire d'éléments ayant, respectivement, des sections de passage $S_1$, $S_2$, $S_3$, ..., on choisit d'abord une épaisseur de paroi à ménager dans les deux plans de symétrie, puis l'on détermine le profil interne elliptique et le profil octogonal externe du modèle ayant la plus faible section de passage $S_1$ dont le profil interne a un grand axe $A_1$ et un petit axe $B_1$ et dont le profil externe présente une grande base de largeur $L_1$, une petite base de largeur $l_1$ et des pans coupés de largeur $E_1$ et, pour réaliser le moulage d'éléments de section $S_n$ supérieure à $S_1$, on agrandit le mandrin interne et le moule externe correspondant à la section $S_1$ en donnant au mandrin interne la section $S_n$ de grand axe $A_n$ et de petit axe $B_n$ et en élargissant les panneaux du moule externe par adjonction de panneaux additionnels couvrant des largeurs, respectivement, $L'_n = A_n - A_1$ et $l'_n = B_n - B_1$, de façon à donner à la grande base une largeur $L_n = L_1 + L'_n$ et à la petite base une largeur $l_n = l_1 + l'_n$, les panneaux de coffrage des pans coupés conservant la même largeur et la même orientation.

De façon particulièrement avantageuse, après avoir défini plusieurs sections de passage, respectivement, $S_1$ d'axes $A_1$ et $B_1$, $S_2$ d'axe $A_2$ et $B_2$, $S_3$ d'axe $A_3$ et $B_3$, etc..., on passe de la plus petite section $S_1$ à une section plus grande telle que $S_2$, $S_3$, etc... en agrandissant le coffrage externe par adjonction de panneaux ayant pour largeur :

$L'_2 = A_2 - A_1$ et $l'_2 = B_2 - B_1$ pour la section $S_2$,

$L'_3 = A_3 - A_1$ et $l'_3 = B_3 - B_1$ pour la section $S_3$,

et ainsi de suite tant que les largeurs obtenues $L_n$ pour la grande base et $l_n$ pour la petite base sont compatibles avec les axes $A_n$ et $B_n$ de la section de passage $S_n$ en restant compris dans les intervalles suivants :

$$\frac{A}{2} - \frac{B}{10} < L < \frac{A}{2} + \frac{B}{3}$$
$$\frac{B}{2} - \frac{A}{20} < l < \frac{B}{2} + \frac{A}{12}$$

Mais l'invention sera mieux comprise par la description suivante de certains modes de réalisation particulier, donnés à titre d'exemples et illustrés par les dessins annexés :

- la Figure 1 représente une section droite d'un élément tubulaire préfabriqué selon l'invention ;
- la Figure 2 représente, en section droite, deux autres exemples d'éléments tubulaires ;
- la Figure 3 montre, en section droite, un ensemble d'éléments modulaires de dimensions différentes ;
- la Figure 4 et la Figure 5 sont deux tableaux de dimensionnement.

Comme on l'a indiqué, l'invention s'appliquer d'une façon générale, à la réalisation d'éléments tubulaires préfabriqués en béton armé comportant un fût tubulaire muni à ses deux extrémités de parties de liaison telles que des abouts, respectivement mâle et femelle, permettant l'emboîtement des tuyaux l'un à la suite de l'autre.

Dans les tuyaux classiques, la paroi latérale du fût tubulaire est limitée par une surface interne et une surface externe cylindriques de révolution autour d'un axe longitudinal.

En revanche, un élément tubulaire préfabriqué selon l'invention présente une section globalement ovale et est limité par une surface externe polygonale.

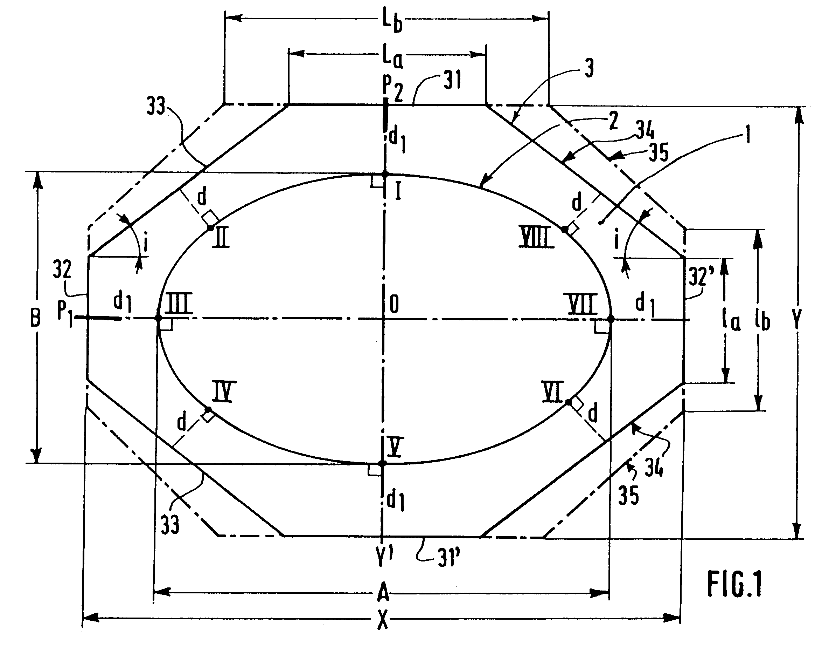

Comme le montre, en effet, la Figure 1 qui est une vue en coupe par un plan perpendiculaire à l'axe, le fût 10 de l'élément 1 est limité vers l'intérieur par une surface interne 2 et vers l'extérieur par une surface externe polygonale 3 qui sont symétriques par rapport à deux plans longitudinaux $P_1$, $P_2$, perpendiculaires

EP 0 508 875 B1

entre eux et passant par l'axe O de l'élément.

Le profil en section droite de la surface interne 2 a, globalement, la forme d'une ellipse ayant un grand axe de longueur A et un petit axe de longueur B situés respectivement dans les deux plans de symétrie $P_1$ et $P_2$.

Le profil externe 3 polygonal présente deux paires de faces planes constituant des grandes bases 31, 31′ parallèles au plan de symétrie $P_1$ et écartées d'une distance Y et deux paires de faces planes constituant des petites bases 32, 32′ parallèles au plan de symétrie $P_2$ et écartées d'une distance X.

Dans l'exemple représenté, la surface polygonale 3 a la forme d'un octogone non régulier et comporte quatre faces planes inclinées par rapport au plans $P_1$, $P_2$ formant des pans coupés de liaison entre les bords latéraux des bases 31, 32, 31′, 32′.

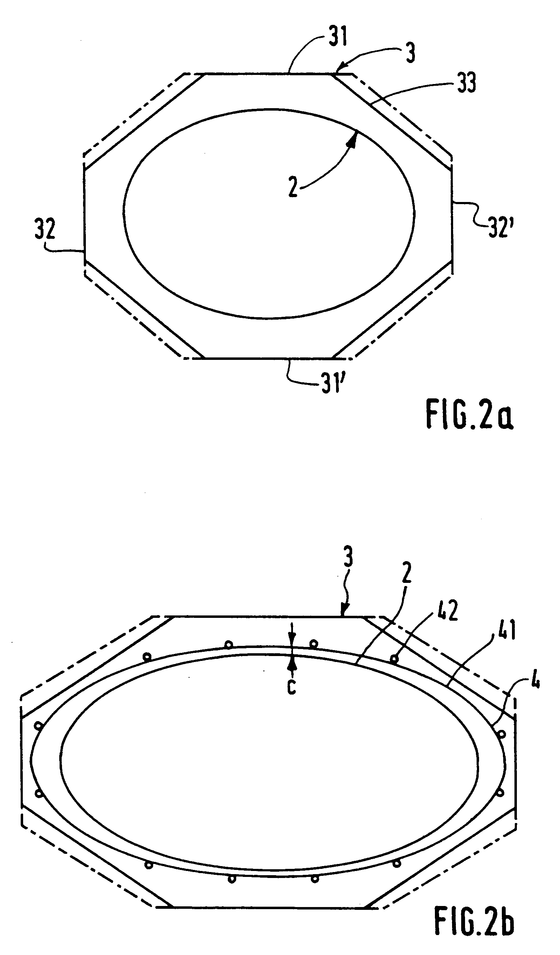

Les deux axes A et B du profil interne 2 ont des longueurs sensiblement différentes, de façon à former une section aplatie, et, en pratique, le rapport du grand axe A au petit axe B pourra aller de 1,3 à 2. En faisant varier le rapport entre le grand axe et le petit axe, on pourra donc aller d'une section elliptique peu aplatie à une section très aplatie, comme on l'a représenté sur les Figures 2a et 2b. Cependant, il ne serait pas utile, en pratique, d'adopter un rapport des axes plus faible que 1,3 car, dans ce cas, il serait plus simple de conserver une section circulaire. Par ailleurs, pour des raisons de résistance, il est préférable de ne pas dépasser un rapport de 2 entre le grand axe et le petit axe.

Sur les Figures, on a donné au profil interne 2 la forme géométrique d'une ellipse, mais il est suffisant, pour obtenir les avantages recherchés, de choisir une forme globalement elliptique et même, éventuellement, polygonale dans la mesure où la surface interne 2 passe par huit points particuliers, les quatre sommets de l'ellipse I, III, V, VII placés, respectivement, dans les plans de symétrie $P_1$ et $P_2$ et les quatre points diagonaux II, IV, VI, VIII présentant des tangentes parallèles aux pans coupés 33.

Une telle section présente de nombreux avantages.

En effet, la section globalement ovale d'un tel élément lui permet de s'adapter facilement aux conditions d'encombrement en hauteur et en largeur du sous-sol puisque, pour une même section de passage interne, on peut diminuer, soit la largeur, soit la hauteur, en augmentant l'autre dimension.

Certes, le tuyau décrit dans le document US-A-2.261.912 présente également une section ovale mais ayant toujours son grand axe vertical et l'on ne pouvait envisager de l'utiliser dans un autre sens, l'épaisseur de la paroi étant minimale au droit du petit axe horizontal.

En revanche, la surface externe polygonale permet la pose de l'élément (1) dans un sens ou dans l'autre, sur une surface simplement aplanie et tassée, les largeurs L et l des bases 31, 32, étant prévues de façon à assurer, d'une part, la stabilité de l'élément, et, d'autre part, une répartition de la pression adaptée à la résistance du sol.

Il faut noter, en outre, que l'utilisation des pans coupés facilite le remblayage car la charge est répartie sur la base inférieure plane dont on peut choisir la largeur et il n'est plus nécessaire de compacter le remblai pour soutenir la partie inférieure du tuyau, comme ce serait le cas pour un tuyau circulaire ou elliptique.

Pour déterminer les différentes dimensions de l'élément, on devra donc tenir compte simultanément de la section de passage à assurer, du gabarit à respecter, des conditions de stabilité et de la résistance nécessaire pour supporter les charges appliquées.

Dans la mesure où un même élément peut avoir son grand axe horizontal ou vertical selon les cas, il est préférable que les sommets I, III, V, VII soient, écartés des faces respectives 31, 32, 31′, 32′, sensiblement de la même distance $d_1$.

On voit, d'autre part, sur la Figure 1, que la distance d entre chaque point diagonal II, IV, VI, VIII et le pan coupé 33 correspondant dépend des largeurs L et l des bases 31, 32.

Il faut, bien entendu, que cette épaisseur d soit suffisante pour assurer la résistance voulue mais, de préférence, on choisira les largeurs relatives L et l pour que l'épaisseur d au droit des points diagonaux soit du même ordre que l'épaisseur d1 au droit des sommets I, III, V, VII.

D'une façon générale, les dimensions des axes A et B du profil interne, l'épaisseur aux sommets $d_1$, les largeurs relatives L et l des quatre bases et les orientations des pans coupés 33 seront déterminés pour obtenir un compromis optimal entre les différentes conditions à assurer, dont les importances relatives peuvent varier selon les cas.

Bien entendu, les axes A et B doivent être choisis de façon que la section de passage $S = \pi AB/4$ permette d'assurer la capacité hydraulique souhaitée. Mais, généralement, l'encombrement de la conduite sera limité soit en hauteur Y, soit en largeur X et, si les épaisseurs aux sommets sont égales à $d_1$, on aura :
$X = A + 2 d_1$ et $Y = B + 2 d_1$ .

Connaissant l'encombrement à respecter, par exemple la largeur X, on déterminera donc la longueur que l'on peut donner à l'axe correspondant de l'ellipse en fonction de l'épaisseur de béton $d_1$ que l'on doit

5

assurer et l'on en déduira la seconde dimension Y permettant d'assurer la section de passage voulue. Les largeurs relatives L et l des bases et l'orientation des pans coupés seront alors déterminées de façon optimale en cherchant, d'une part, à conserver une surface d'assise nécessaire à la stabilité et, d'autre part, à diminuer le volume global de béton tout en assurant, au droit des quatre points II, IV, VI, VIII une épaisseur d de béton du même ordre que l'épaisseur $d_1$ et, en tout cas, suffisante pour assurer la résistance voulue compte tenu de la disposition du ferraillage. On notera, d'ailleurs, que l'utilisation d'une base large permet de réduire les sollicitations dans la paroi.

La largeur à donner à la surface d'assise dépendra des conditions d'implantation sur le site et, notamment, de la résistance du terrain et des risques de déstabilisation du tuyau, ce dernier risquant, évidemment, d'être plus instable lorsqu'il est posé sur une petite base de largeur l.

En pratique, le rapport de la grande base 31 à la petite base 32 sera sensiblement égal au rapport entre le grand axe A et le petit axe B et, par conséquent, pourra aller de 1,3 à 2. Il en résulte que l'angle d'inclinaison i d'un pan coupé 33 par rapport au plan de symétrie $P_1$ pourra varier entre 30 et 50° et, de préférence, entre 32 et 49°.

A titre d'exemple, sur la Figure 1, on a représenté, pour une même épaisseur au sommet $d_1$, la surface extérieure 34 de périmètre minimal, indiqué en traits pleins, et la surface extérieure 35 de périmètre maximal, indiqué en traits mixtes, la largeur L des grandes bases 31, 31', pouvant varier entre La et Lb, et la largeur l des petites bases 32, 32' pouvant varier entre la et lb.

On a pu établir que, compte tenu des épaisseurs $d_1$ à donner, normalement, au béton, pour obtenir le meilleur compromis entre les avantages recherchés, en particulier les exigences de stabilité et de résistance et l'utilisation d'un volume minimal de béton, la largeur L de la grande base et la largeur l de la petite base devaient rester comprises dans les intervalles suivants :

1) $\frac{A}{2} - \frac{B}{10} < L < \frac{A}{2} + \frac{B}{3}$

2) $\frac{B}{2} - \frac{A}{20} < l < \frac{B}{2} + \frac{A}{12}$

Il faut noter que, outre les avantages déjà mentionnés, l'utilisation d'une section externe octogonale et le respect des formules indiquées permettent de donner aux pans coupés des inclinaisons favorisant la réalisation d'un remblayage correct sous les flancs de l'ouvrage. Le plus souvent, il n'est pas nécessaire de compacter le remblai sous les pans coupés, un simple remplissage étant suffisant pour obtenir la résistance structurelle voulue.

Par rapport à un tuyau de section circulaire classique, l'invention permet donc de diminuer l'encombrement en hauteur ou en largeur, tout en conservant la même capacité hydraulique et en assurant d'excellentes conditions d'écoulement grâce à la forme elliptique de la surface interne, alors que la forme polygonale de la surface externe facilite le coffrage de celle-ci.

Par ailleurs, un autre avantage important de l'invention réside dans le fait que, comme on l'a représenté schématiquement sur la Figure 2b, les éléments tubulaires selon l'invention peuvent être réalisés de la même façon que les tuyaux classiques de section circulaire.

Le moule servant au bétonnage de l'élément comprend, comme habituellement, un mandrin intérieur à section elliptique pour le moulage de la surface interne 2 et un coffrage externe mais, selon l'invention, ce dernier est constitué de panneaux plans associés délimitant une surface prismatique à section droite polygonale et, de préférence, octogonale.

Comme dans le cas des tuyaux circulaires, l'armature 4 peut être constituée de barres longitudinales 42 associées à des cerces 41 ayant un profil elliptique prévu en fonction de celui des surfaces interne et externe, l'ensemble étant réalisé par bobinage à la cageuse puis enfilé dans un moule vertical.

La cageuse peut comporter un mandrin à profil elliptique correspondant à celui que l'on doit donner à l'armature.

Mais il est aussi possible d'utiliser une cageuse classique comportant un mandrin circulaire dont le diamètre est déterminé pour que son périmètre corresponde à celui du profil elliptique que l'on doit donner aux cerces 41. Après avoir réalisé, par bobinage, une telle armature circulaire, on peut en effet l'ovaliser à la presse pour lui donner l'excentricité désirée, puis on l'introduit dans le coffrage pour le bétonnage de l'élément.

Le profil de l'armature 4 peut, avantageusement, avoir une excentricité un peu différente de celle de la surface interne 2, de façon que, comme on l'a représenté sur la Figure 2b, les armatures 41, 42 passent à proximité de la surface interne 2 dans le plan vertical $P_2$ et des côtés verticaux 32, dans le plan horizontal $P_1$, ce qui permet de mieux résister aux contraintes et d'alléger l'armature.

Mais un autre avantage très important de l'invention réside dans le fait qu'elle permet une réalisation modulaire des éléments. Il est en effet possible de définir des gammes d'éléments types de différentes sections, que l'on peut réaliser dans des coffrages assez semblables pour passer de l'un à l'autre en modifiant simplement les écartements ou les dimensions des panneaux de moulage des différentes parois.

EP 0 508 875 B1

On a ainsi pu établir une méthode pour la définition de gammes modulaires d'éléments préfabriqués.

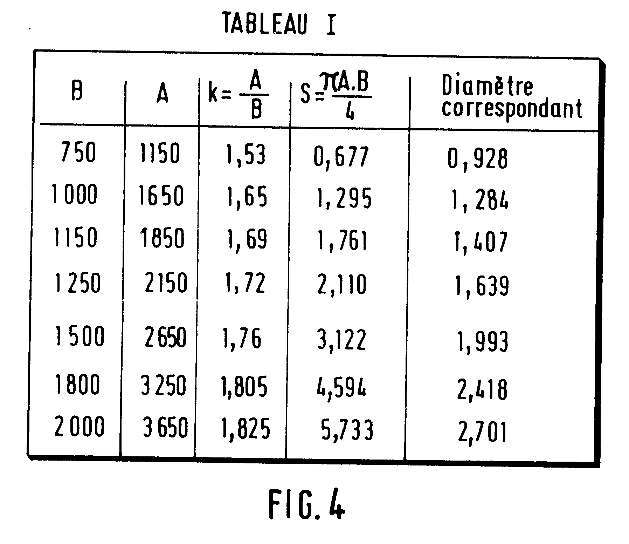

Le Tableau I donné sur la Figure 4 ci-jointe, indique, par exemple, les dimensions d'une gamme d'ellipses couvrant des sections de passage S qui vont de 0,677 m2 à 5,733 m2.

Le Tableau I donne, en colonnes successives, les valeurs que l'on peut donner au petit axe B et au grand axe A, l'excentricité $k = A/B$, la surface correspondante de la section droite $S = \pi AB/4$ et le diamètre de la section circulaire correspondante qui est égal à $4 S /\pi$.

On a ainsi défini sept sections : $S_1$ d'axes $A_1 = 1150$, $B_1 = 750$ ; $S_2$ (1650, 1.000) ... $S_7$ (3.650, 2.000) qui permettent de couvrir toute une gamme de dimensions utilisées en pratique.

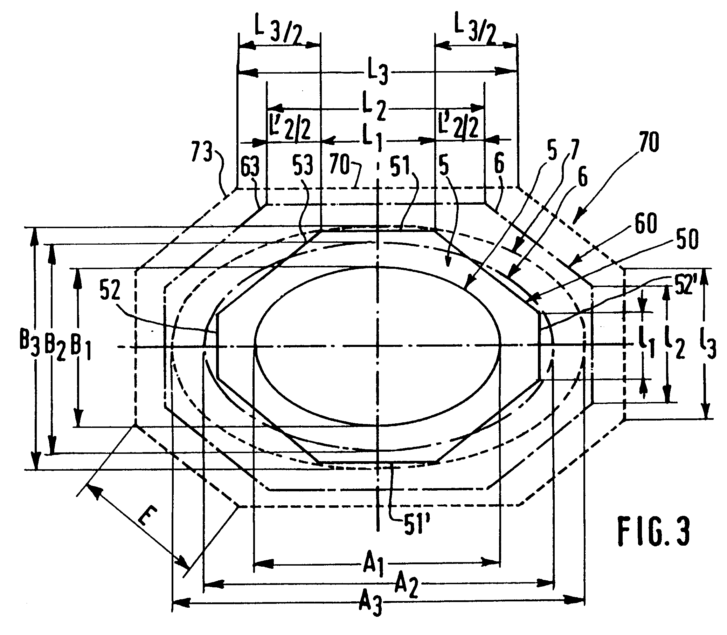

Sur la Figure 3, on a représenté, à titre d'exemple, trois sections imbriquées, respectivement, 5 représentée en trait plein, 6 représentée en trait mixte et 7, représentée en tirets et correspondant aux sections :

| $S_1$ d'axe | $A_1 = 1.150$ | $B_1 = 750$ |
| $S_2$ " | $A_2 = 1.650$ | $B_2 = 1.000$ et |
| $S_3$ " | $A_3 = 1.950$ | $B_3 = 1.150$. |

On voit qu'il est possible d'associer aux trois ellipses, 5, 6, 7 des surfaces externes polygonales 50, 60, 70 dont les pans coupés 53, 63, 73 ont même longueur et sont parallèles entre eux.

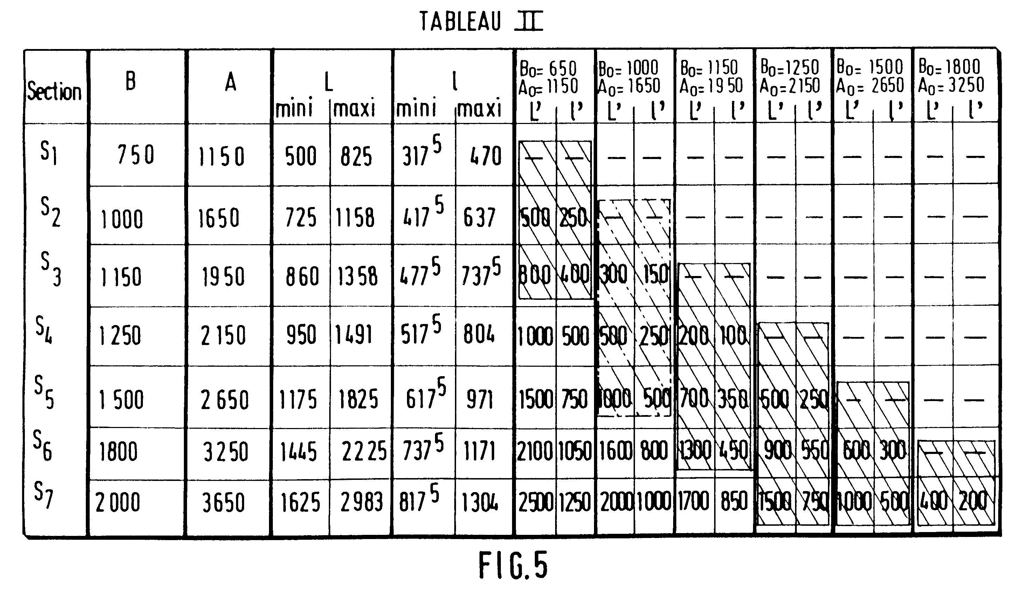

Cette propriété est montrée par le Tableau II donné sur la Figure 5 jointe et qui indique en colonnes successives:
- la référence de la section droite S,
- le petit axe B et le grand axe A correspondants,
- les valeurs minimale et maximale de la largeur L de la grande base,
- les valeurs minimale et maximale de la largeur l de la petite base, déterminées en fonction des inéquations 1) et 2) indiquées plus haut,
- les différentes possibilités de variations modulaires de la section en colonnes successives.

Chaque colonne indique les axes $A_o$ et $B_o$ d'un profil de départ de section minimale et précise, en deux sous-colonnes, à gauche, la différence L′ entre le grand axe de la section considérée et le grand axe de la section de base et, à droite, la différence l′ entre le petit axe de la section considérée et le petit axe de la section de base.

Dans chaque colonne, à partir d'un profil de départ de section minimale, on obtient les longueurs des axes des ellipses suivantes en ajoutant aux deux axes les distances L′ et l′ indiquées sur la ligne correspondante du tableau.

Par exemple, si l'on se reporte à la première colonne du tableau, la section de départ $S_1$ a pour grand et petit axes, respectivement : $A_1 = 1.150$ et $B_1 = 750$.

Pour passer à la section suivante $S_2$, ayant pour axe A2 = 1.650 et $B_2 = 1.000$, il faut ajouter à $A_1$ une largeur $L'_2 = 500$ et à $B_1$ une largeur $l'_2 = 250$.

Pour passer à la section $S_3$, ayant pour axes $A_3 = 1.950$ et $B_3 = 1.150$, il faut ajouter à l'axe $A_1$ de la section de départ une distance $L'_3 = 800$ et au petit axe $B_1$ une distance $l'_3 = 400$.

Selon l'invention, pour la réalisation du coffrage extérieur, on utilise des panneaux plans dont les largeurs correspondent aux différences entre les axes de la section considérée et ceux de la section de départ.

A titre d'exemple, la Figure 3 représente trois éléments d'une même gamme.

Si l'on part du profil 5 dont la surface interne a pour section $S_1$, on pourra réaliser le coffrage extérieur 60 du profil 6 de section $S_2$ ayant pour grand axe $A_2 = 1.650$ et pour petit axe $B_2 = 1.000$, à partir du coffrage 50 du profil de départ en ajoutant aux panneaux de coffrage des grandes bases 51, 51′ et des petites bases 52, 52′, de largeur $L_1$ et $l_1$, des panneaux additionnels dont la largeur, indiquée sur la ligne correspondante du tableau II, sera $L'_2 = 500$ et $l'_2 = 250$.

Dans la mesure où la largeur $l_1$ de la petite base 52 de l'élément de départ doit être comprise, comme indiqué sur les deuxième et troisième colonnes du tableau II, entre 500 et 825, la largeur $L_2$ de la grande base 61 de l'élément 6 ayant pour section $S_2$ obtenue par adjonction d'un panneau de largeur $L'_2 = 500$, sera elle-même comprise entre 1.000 et 1.325.

On voit qu'au moins une partie de cet intervalle reste compatible avec les inéquations 1) et 2) indiquées plus haut et qui correspondent, comme on le voit sur le tableau II, à un intervalle de 725 à 1.158 pour la section $S_2$ d'axes 1.650 et 1.000.

De même, il est possible, à partir du coffrage extérieur 50 de l'élément de départ 5 de section $S_1$, de réaliser le coffrage extérieur 70 d'un élément 7 de section $S_3$ en ajoutant à la grande base 51 et à la petite

7

base 52 des panneaux additionnels de largeur $L'_3$ = 800 et $l'_3$ = 400.

En revanche, le coffrage extérieur d'un élément ayant pour section $S_4$ (2.150, 1.350) ne pourrait pas être construit en ajoutant simplement aux grande et petite bases de l'élément 5, comme l'indique le tableau II, des panneaux de largeur $L'_4$ = 1.000 et $l'_4$ = 500 car, dans ce cas, on ne pourrait pas respecter les intervalles donnés par les inéquations 1) et 2) plus haut et qui conduisent aux valeurs indiquées sur la ligne correspondante du tableau II.

A partir du coffrage d'un élément 5 de section minimale $S_1$, on peut donc, par simple adjonction de panneaux, construire des éléments 6 et 7 ayant les sections $S_2$ et $S_3$ qui ont été encadrées en traits mixtes sur le Tableau II.

On peut vérifier que, de la même façon, à partir d'un coffrage correspondant à une section de départ $S_2$, on peut, par adjonction de panneaux additionnels dont les largeurs sont indiquées sur le tableau II, construire trois autres sections $S_3$, $S_4$, $S_5$.

Sur la Figure 3, on vérifie que, dans les trois cas, les pans coupés 53, 63 et 73 conservent la même longeur et la même orientation. Le coffrage des surfaces externes polygonales peut donc être réalisé de façon très simple.

Sur le Tableau II, on a donc encadré en traits mixtes, dans chaque colonne, les éléments qui peuvent se déduire d'un élément de départ et forment ainsi une gamme.

On vérifie, en outre, que les éléments des différentes gammes indiquées peuvent être réalisés à partir d'un ou deux modèles de départ en disposant d'un assez petit nombre de panneaux additionnels.

Les Tableaux I et II ont été établis pour sept sections dont les excentricités sont du même ordre mais on aurait pu, de la même façon, définir les caractéristiques de sections modulaires ayant des excentricités plus faibles ou plus fortes.

On peut observer que le mode de réalisation modulaire qui vient d'être décrit conduit à modifier la forme générale, en section droite, de la surface externe 3 et les épaisseurs relatives de la paroi latérale, puisque l'on conserve les longueurs et les orientations des pans coupés. On pourrait, cependant, prévoir également une réalisation modulaire des pans coupés, par adjonction de panneaux supplémentaires, ce qui permettrait, par exemple, d'obtenir des sections sensiblement homothétiques en conservant les mêmes proportions relatives entre les différentes dimensions.

Bien entendu, il faudra également prévoir des moyens d'élargissement du mandrin intérieur utilisé pour le coffrage du profil interne elliptique. Différents moyens connus peuvent être employés à cet effet. On pourrait, par exemple, diviser l'ellipse de départ de section minimale en quatre segments circulaires dont les courbures correspondent aux cercles surosculateurs de l'ellipse. Pour obtenir le coffrage des sections supérieures, il suffirait d'écarter ces segments pour agrandir les axes en conservant les mêmes courbures aux sommets et en les reliant par des panneaux plans pour obtenir une section de passage agrandie correspondant sensiblement au profil elliptique souhaité. Mais d'autres dispositions peuvent évidemment être envisagées.

L'invention ne se limite, d'ailleurs, pas aux seuls modes de réalisation qui viennent d'être décrits mais elle en couvre les variantes restant dans le cadre des revendications.

Par exemple, la mise en oeuvre de l'invention n'impose pas que les éléments tubulaires soient réalisés en béton armé et, le cas échéant, on pourrait utiliser toute autre matière pouvant être moulée, coulée ou injectée, par exemple une matière plastique, de la fonte, etc....

En outre, s'il est préférable de donner à la surface interne, un profil elliptique, comme on l'a représenté sur les figures, on pourrait, cependant, utiliser d'autres formes sensiblement ovales, ou polygonales à au moins huit côtés.

De même, on a décrit l'invention dans le cas de surfaces externes octogonales, ce mode de réalisation étant le plus simple pour l'obtention des résultats recherchés, mais on pourrait aussi utiliser, par exemple, une surface à douze côtés.

Par ailleurs, les surfaces internes et externes des éléments selon l'invention ne doivent pas nécessairement être rigoureusement cylindriques et prismatiques car on pourrait envisager une certaine variation de section d'une extrémité à l'autre du tuyau, par exemple pour passer progressivement de la section circulaire de base à une section elliptique aplatie.

Les signes de référence, insérés après les caractéristiques techniques mentionnées dans les revendications, ont pour seul but de faciliter la compréhension de ces dernières et n'en limitent aucunement la portée.

**Revendications**

1. Elément tubulaire préfabriqué de construction d'une conduite, réalisé par moulage dans un moule limité par un mandrin interne et par un coffrage externe, et comportant un fût tubulaire limité par une paroi latérale (1) ayant une surface interne (2) et une surface externe (3) symétriques par rapport à deux plans ($P_1$, $P_2$) perpendiculaires entre eux et passant par un axe longitudinal (0), au moins la surface interne (2) présentant, en section transversale à l'axe (O), un profil globalement ovale ayant deux axes inégaux, respectivement un grand axe (A) et un petit axe (B),

   caractérisé par le fait que la surface externe (3) de la paroi latérale (1) présente, en section transversale à l'axe (O), un profil polygonal à au moins huit côtés, respectivement deux côtés (31, 31') parallèles au grand axe (A) écartés l'un de l'autre d'une distance (Y), deux côtés (32, 32') parallèles au petit axe (B) écartés l'un de l'autre d'une distance (X) et au moins quatre côtés (33) inclinés par rapport aux dits axes, les écartements (X) et (Y) entre les deux côtés des deux paires (31, 31') et (32, 32') étant différents de façon que chaque élément préfabriqué présente deux possibilités de pose sur une surface plane avec des encombrements différents en hauteur et en largeur.

2. Elément tubulaire selon la revendication 1, caractérisé par le fait que le profit interne (2), en section droite, suit sensiblement une ellipse passant par quatre sommets (I, III, V, VII) situés sur les deux plans de symétrie ($P_2$, $P_1$) et à tangentes parallèles aux côtés correspondants (31, 32) du profit externe (3) et par au moins quatre points diagonaux (II, IV, VI, VIII) situés entre lesdits plans de symétrie et à tangentes parallèles aux côtés inclinés (33) et que les quatre sommets I, III, V, VII) du profil interne (2) sont écartés des côtés correspondants (31, 31') (32, 32') du profil externe (3) de distance ($d_1$) sensiblement égales.

3. Elément tubulaire selon la revendication 2, caractérisé par le fait que les quatre sommets (I, III, V, VII) et les quatre points diagonaux (II, IV, VI, VIII) sont écartés de distances de même ordre des côtés correspondants du profil externe, de façon que la paroi latérale de l'élément (1) ait, sur toute sa périphérie, une épaisseur (d) sensiblement uniforme.

4. Elément tubulaire selon l'une des revendications 1 à 3, caractérisé par le fait que les largeurs relatives (L, l) des côtés parallèles (31, 31') (32, 32') et l'orientation des côtés inclinés (33) sont déterminées de façon à assurer de façon optimale, d'une part, une surface d'assise suffisante pour la stabilité et, d'autre part, une épaisseur suffisante sur toute la périphérie pour assurer la résistance aux charges appliquées.

5. Elément tubulaire selon l'une des revendications 2 à 4, caractérisé par le fait que le profil interne (2) suit, en section droite, une ligne courbe continue.

6. Elément tubulaire selon l'une des revendications 2 à 4, caractérisé par le fait que le profil interne (2) suit, en section droite, une ligne polygonale à au moins huit côtés.

7. Elément tubulaire selon l'une des revendications précédentes, caractérisé par le fait que le rapport du grand axe (A) au petit axe (B) du profil interne (2) peut aller de 1,3 à 2.

8. Elément tubulaire selon l'une des revendications précédentes, caractérisé par le fait que les quatre côtés inclinés (33) du profil externe (3) font un angle compris entre 30° et 50° avec la direction du grand axe (A) du profil interne (2).

9. Procédé de réalisation d'un élément tubulaire préfabriqué, de construction d'une conduite, par coulée d'une matière moulable telle que du béton dans un moule limité par un coffrage externe et par un mandrin interne, l'élément tubulaire ainsi coulé comportant un fût tubulaire (1) ayant une surface interne (2) et une surface externe (3) coffrées respectivement sur le mandrin interne et sur le coffrage externe et symétrique, par rapport à deux plans ($P_1$, $P_2$) perpendiculaires entre eux et passant par un axe longitudinal (0), au moins la surface interne (2) présentant, en section transversale à l'axe (O), un profil globalement ovale ayant deux axes inégaux, respectivement un grand axe (A) et un petit axe (B), dirigés respectivement suivant les deux plans P1, P2 de symétrie,

   caractérisé par le fait que le coffrage externe est constitué d'au moins huit panneaux plans délimitant une surface prismatique à section droite polygonale, de telle sorte que la surface externe (3) de l'élément moulé présente deux grandes bases (31, 31') parallèles au grand axe (A) du profil interne (2), ayant une largeur L et écartées l'une de l'autre d'une distance (Y), deux petites bases (32, 32') parallèles au petit axe (B), ayant une largeur l et écartées l'une de l'autre d'une distance (X) et quatre pans coupés (33) inclinés par rapport aux dits axes, les distances (X), (Y), entre les faces parallèles étant différentes.

10. Procédé de réalisation d'un élément tubulaire selon la revendication 9, caractérisé par le fait que, pour déterminer les profils en section droite du mandrin interne et du coffrage externe, on choisit tout d'abord les dimensions (A) du grand axe et (B) du petit axe du profil interne elliptique en fonction de la capacité hydraulique à obtenir et de l'encombrement dont on dispose dans au moins l'une des deux directions verticale et horizontale, compte tenu de l'épaisseur de béton (d) à donner à la paroi (1), on détermine alors les écartements X, Y des faces planes (32, 31) perpendiculaires aux plans de symétrie ($P_1$, $P_2$) puis le positionnement optimal des pans coupés (33) permettant de ménager une épaisseur (d) déterminée et sensiblement constante de la paroi latérale (1) en conservant une largeur (L) minimale de la surface d'assise (31) compatible avec la résistance de la surface de pose et les conditions de stabilité au non-renversement.

11. Procédé de réalisation d'un élément tubulaire selon la revendication 1O, caractérisé par le fait que, pour un profil interne elliptique ayant pour grand axe (A) et pour petit axe (B), on détermine le positionnement et l'orientation des côts inclinés (33), de façon que la largeur (L) de la grande base (31) de la surface externe (3), parallèle au grand axe (A) et que la largeur (l) de la petite base (32), parallèle au petit axe (B), restent comprises dans les intervalles suivants :

$$\frac{A}{2} - \frac{B}{10} < L < \frac{A}{2} + \frac{B}{3}$$
$$\frac{B}{2} - \frac{A}{20} < l < \frac{B}{2} + \frac{A}{12}$$

12. Procédé de réalisation modulaire d'éléments tubulaires selon au moins l'une des revendications précédentes, caractérisé par le fait que l'on définit une gamme de sections elliptiques $S_1$, $S_2$, $S_3$ ... d'aires différentes, ayant pour grand axe, respectivement, $A_1$, $A_2$, $A_3$ ... et pour petit axe, respective-ment, $B_1$, $B_2$, $B_3$ ..., et que l'on réalise au moins deux modèles d'éléments ayant, respectivement, pour sections $S_1$, $S_2$, à l'intérieur d'un même moule, ce dernier comprenant un coffrage externe à section droite octogonale limité par huit parois verticales et un mandrin interne à section droite elliptique, et que l'on passe du type $S_1$ de section inférieure à un type $S_2$ de section supérieure par élargissement d'au moins certaines des parois de coffrage de la surface externe (3).

13. Procédé de réalisation modulaire d'éléments tubulaires selon la revendication 12, caractérisé par le fait que, pour passer d'une section $S_1$ à une section supérieure $S_2$, on élargit seulement les parois de coffrage de la grande et de la petite base en conservant, d'une section à l'autre, la même largeur et la même orientation des parois de coffrage des pans coupés (33).

14. Procédé selon la revendication 13 de réalisation modulaire d'éléments tubulaires selon la revendication 13, caractérisé par le fait que, pour réaliser une gamme modulaire d'éléments ayant, respectivement, des sections de passage $S_1$, $S_2$, $S_3$ ..., on choisit d'abord une épaisseur de paroi à ménager dans les deux plans de symétrie ($P_1$, $P_2$), puis l'on détermine le profil elliptique interne et le profil octogonal externe du modèle (5) ayant la plus faible section de passage $S_1$ dont le profil interne (5) a un grand axe $A_1$ et un petit axe $B_1$ et dont le profil externe (50) présente une grande base (51) de largeur $L_1$, une petite base (52) de largeur $l_1$ et des pans coupés (53) de largeur E et, pour réaliser le moulage d'éléments de section $S_n$ supérieure à $S_1$, on agrandit le mandrin interne et le moule externe correspondant à la section $S_1$ en donnant au mandrin interne la section $S_n$ de grand axe $A_n$ et de petit axe $B_n$ et en élargissant les panneaux du moule externe par adjonction de panneaux complémentaires couvrant des largeurs, respectivement, $L'_n = A_n - A_1$ et $l'_n = B_n - B_1$, de façon à donner à la grande base une largeur $L_n = L_1 + L'_n$ et à la petite base une largeur $l_n = l_1 + l'_n$, les panneaux de coffrage des pans coupés conservant la même largeur et la même orientation.

15. Procédé selon la revendication 14 de réalisation modulaire d'éléments tubulaires, caractérisé par le fait que l'on passe de la plus petite section $S_1$ à une section plus grande telle que $S_2$, $S_3$, etc... en agrandissant le coffrage externe par adjonction de panneaux ayant pour largeur :

$L'_2 = A_2 - A_1$ et $l'_2 = B_2 - B_1$ pour la section $S_2$,

EP 0 508 875 B1

$L'_3 = A_3 - A_1$ et $l'_3 = B_3 - B_1$ pour la section $S_3$,
et ainsi de suite tant que les largeurs obtenues $L_n$ pour la grande base et $l_n$ pour la petite base sont compatibles avec les axes $A_n$ et $B_n$ de la section de passage $S_n$.

16. Procédé de réalisation d'un élément tubulaire, selon l'une des revendications précédentes, par coulée de béton dans un moule limité par un coffrage externe et par un mandrin interne constitué d'un mandrin de forme cylindrique, une armature métallique (4) étant placée à l'intérieur dudit moule avant la coulée du béton, caractérisé par le fait que l'on réalise une armature cylindrique (4) ayant une section droite elliptique prévue en fonction des profils interne (2) et externe (3) de l'élément tubulaire (1) à réaliser, et que ladite armature est constituée de fers longitudinaux (42) associés à des cerces hélicoïdales (41) et est réalisée par bobinage.

17. Procédé de réalisation d'un élément selon la revendication 16, caractérisé par le fait que l'armature (4) est préfabriquée par bobinage à la cageuse puis enfilée dans le moule.

18. Procédé de réalisation d'un élément selon la revendication 16, caractérisé par le fait que l'on réalise une armature (4) à section droite circulaire que l'on ovalise ensuite à la presse de façon à lui donner la forme elliptique souhaitée.

**Claims**

1. Prefabricated tubular element for the manufacture of a duct, performed by casting into a mould limited by an inner chuck and by an outer casing, and containing a tubular shaft limited by a side panel (1) with an inner surface (2) and an outer surface (3) symmetric with respect to two planes (P1, P2) perpendicular with respect to each other and passing through a longitudinal axis (0), whereas at least the inner surface (2) exhibits, in a cross section to the axis (0), a more or less oval profile with two unequal axes, respectively a long axis (A) and a short axis (B), characterised in that the outer surface (3) of the side panel (1) shows, in cross section to the axis (0), a polygon profile with at least eight sides, respectively two sides (31, 31') parallel to the long axis (A) spread apart from one another by a distance (Y), two sides (32, 32') parallel to the short axis (B) spread apart from one another by a distance (X) and at least four sides (33) tilted with respect to said axes, whereas the distances (X) and (Y) between both sides of both pairs (31, 31') and (32, 32') are different so that each prefabricated element exhibits two possibilities of layout on a plane surface with various space requirements in height and in width.

2. Tubular element according to claim 1, characterised in that the inner profile (2), as a straight section, runs more or less along an ellipse passing through four vertices (I, III, V, VII) located on both symmetry planes (P2, P1) and with tangents parallel to the corresponding sides (31, 32) of the outer profile (3) and by at least four diagonal points (II, IV, VI, VIII) located between said symmetry planes and with tangents parallel to the tilted sides (33) and that the four vertices (I, III, V, VIII) of the inner profile (2) are spread apart from the corresponding sides (31, 31') (32, 32') of the outer profile (3) by more or less equal distances (d1).

3. Tubular element according to claim 2, characterised in that the four vertices (I, III, V, VII) and the four diagonal sides (II, IV, VI, VIII) are spread apart over similar distances from the corresponding sides of the outer profile, so that the thickness (d) of the side panel of the element (1) is more or less even over it all periphery.

4. Tubular elements according to one of claims 1 to 3, characterised in that the relative widths (L, l) of the parallel sides (31, 31') (32, 32') and the orientation of the tilted sides (33) are determined in order to ensure as well as possible a bearing surface sufficient for stability purposes on the one hand and sufficient thickness over the whole periphery to guarantee resistance to any loads applied, on the other.

5. Tubular element according to one of claims 2 to 4, characterised in that the inner profile (2) runs, as a straight section, along a continuous curve.

6. Tubular element according to one of claims 2 to 4, characterised in that the inner profile (2) runs, as a straight section, a polygon line with at least eight sides.

11

7. Tubular element according to one of the previous claims, characterised in that the ratio of the long axis (A) to the short axis (B) of the inner profile (2) can range from 1.3 to 2.

8. Tubular element according to one of the previous claims, characterised in that the four tilted sides (33) of the outer profile (3) describe an angle comprised between 30° and 50° with the direction of the long axis (A) of the inner profile (2).

9. Manufacturing process of a prefabricated tubular element, for the manufacture of a duct by casting a mouldable material such as concrete into a mould limited by an outer casing and by an inner chuck, whereas the tubular element so cast exhibits a tubular shaft (1) with an inner surface (2) and an outer surface (3) lagged respectively on the inner chuck and on the outer casing and symmetric with respect to two planes (P1, P2) perpendicular to one another and passing through a longitudinal axis (0), whereas the inner surface (2) shows, in cross section to the axis (0), a more or less oval profile with two unequal axes, respectively a long axis (A) and a short axis (B), oriented respectively according to both symmetry planes P1, P2,
characterised in that the outer casing is made of at least eight plane panels limiting a polygon straight section prismatic surface, so that the outer surface (3) of the cast element exhibits two large bases (31, 31') parallel to the long axis (A) of the inner profile (2), with width L and spread apart from one another by a distance (Y), two small bases (32, 32') parallel to the short axis (B) with width l and spread apart from one another by a distance (X) and four bevelled edges (33) tilted with respect to said axes, whereby the distances (X), (Y) between the parallel surfaces, are different.

10. Manufacturing process of a tubular element according to claim 9, characterised in that, to determine the straight section profiles of the inner chuck and of the outer casing, one selects first of all the sizes (A) of the long axis and (B) of the short axis of the elliptic inner profile in relation to the hydraulic capacity to be obtained and to the space requirement available in at least one of both vertical and horizontal directions, taking into account the thickness of the concrete (d) to confer to the wall (1), then one defines the spaces X, Y between the plane surfaces (32, 31) perpendicular to the symmetry planes (P1, P2), then the optimum positioning of the bevelled edges (33) enabling to arrange a determined thickness (d) and more or less constant of the side panel (1) while keeping a minimum width (L) of the bearing surface (31) compatible with the support area resistance as well as the non-tipping stability conditions.

11. Manufacturing process of a tubular element according to claim 10, characterised in that, for an elliptic inner profile with a long axis (A) and a short axis (B), one determines the positioning and the orientation of the tilted sides (33) so that the width (L) of the large base (31) of the outer surface (3), parallel to the long axis (A) and that the width (l) of the small base (32) parallel to the short axis (B), remain within the following intervals :

$$\frac{A}{2} - \frac{B}{10} < L < \frac{A}{2} + \frac{B}{3}$$
$$\frac{B}{2} - \frac{A}{20} < l < \frac{B}{2} + \frac{A}{12}$$

12. Modular manufacturing process of tubular elements according at least to one of the previous claims, characterised in that one defines a set of elliptic sections S1, S2, S3 ... of different areas, with as long axes, respectively, A1, A2, A3 ... and as short axes, B1, B2, B3 ... and that one manufactures at least two models of elements with, respectively, as sections S1, S2, inside the same mould, whereby the former comprises an outer casing with octagonal straight section, limited by eight vertical panels and an inner chuck with elliptic straight section, and that one changes from a smaller section type S1 to a larger section type S2 by enlarging at least some of the casing panels of the outer surface (3).

13. Modular manufacturing process of tubular elements according to claim 12, characterised in that, to change from a section S1 to a larger section S2, only the casing panels of the large and of the small bases are enlarged while keeping, from one section to the other, the same width and the same orientation of the casing panels of the bevelled edges (33).

14. Process according to claim 13 for the modular manufacture of tubular elements according to claim 13, characterised in that, to manufacture a range of modular elements with, respectively, passage sections S1, S2, S3 ..., first of all one selects a wall thickness to be arranged in both symmetry planes (P1, P2) then one determines the inner elliptic profile and the outer octagonal profile of the model (5) with the smallest passage section S1 whose inner profile (5) has a long axis A1 and a short axis B1 and whose outer profile (50) exhibits a large base (51) with width L1, a small base (52) with width l1 and bevelled edges (53) with width E and, in order to cast elements whose section Sn is greater than S1, one enlarges the inner chuck as well as the outer mould corresponding to the section S1 by giving the inner chuck the section Sn of the long axis An and of the short axis Bn and while enlarging the panels of the outer mould by inserting additional panels with widths, respectively of L'n = An - A1 and l'n = Bn - B1, in order to give the large base a width Ln = L1 + L'n and the small base a width ln = l1 + l'n, whereas the casing panels of the bevelled edges keep the same width and the same orientation.

15. Process according to claim 14 for the modular manufacture of tubular elements, characterised in that one changes from the smallest section S1 to a larger section such as S2, S3, etc... by enlarging the outer casing by inserting panels whose widths equal :
L'2 = A2 - A1 and l'2 = B2 - B1 for section S2,
L'3 = A3 - A1 and l'3 = B3 - B1 for section S3,
and so on as long as the widths obtained Ln for the large base and ln for the small base are compatible with the axes An and Bn of the passage section Sn.

16. Manufacture process of a tubular element, according to one of the previous claims by casting concrete into a mould limited by an outer casing and an inner chuck made of a chuck cylindrical in shape, a metal reinforcement (4) being located inside said mould before concrete is cast, characterised in that one provides a cylindrical reinforcement (4) with a straight elliptic section designed for the inner (2) and outer (3) profiles of the tubular element (1) to be manufactured and that said reinforcement is made of longitudinal irons (42) related to helical screeds (41) and performed by way of winding.

17. Manufacturing process of an element according to claim 16, characterised in that the reinforcement (4) is prefabricated by winding using a roll frame, then inserted into the mould.

18. Manufacturing process of an element according to claim 16, characterised in that one makes a reinforcement (4) with a circular straight section that is then oval-pressed in order to confer it the elliptic shape desired.

## Patentansprüche

1. Vorgefertigtes rohrförmiges Element zum Bau einer Leitung, das durch Giessen in einer durch einen Innendorn und durch eine Aussenschalung begrenzten Form gefertigt wird, die einen Rohrschaft, der durch eine Seitenwand (1) mit einer Innenfläche (2) und einer Aussenfläche (3) begrenzt ist, aufweist, die zu zwei zueinander senkrechten und durch eine Längsachse (O) verlaufenden Ebenen (P1, P2) symmetrisch sind, wobei mindestens die Innenfläche (2) im Querschnitt quer zur Achse (O) ein insgesamt ovales Profil mit zwei ungleichen Achsen, eine grosse Achse (A) und eine kleine Achse (B) aufweist, dadurch gekennzeichnet, dass die Aussenfläche (3) der Seitenwand (1) im Querschnitt quer zur Achse (O) ein Vieleckprofil mit mindestens acht Seiten aufweist, jeweils zwei zur grossen Achse (A) parallele und in einem Abstand (Y) voneinander angeordnete Seiten (31, 31'), zwei zur kleinen Achse (B) parallele und in einem Abstand (X) voneinander angeordnete Seiten (32, 32'), und mindestens vier zu diesen Achsen geneigte Seiten (33), wobei die zwei Seiten der beiden Paare (31, 31') und (32, 32') unterschiedliche Abstände aufweisen, damit jedes vorgefertigte Element zwei Verlegungsmöglichkeiten auf einer ebenen Fläche mit einem in der Höhe und in der Breite unterschiedlichen Raumbedarf aufweist.

2. Rohrförmiges Element nach Anspruch 1, dadurch gekennzeichnet, dass das Innenprofil (2) im Querschnitt im wesentlichen eine Ellipse ist, die durch vier in den beiden Symmetrieebenen liegende Scheitelpunkte (I, III, V, VII) verläuft, deren Tangenten parallel zu den entsprechenden Seiten (31, 32) des Aussenprofils (3) sind, sowie durch mindestens vier zwischen diesen Symmetrieebenen liegende Diagonalpunkte (II, IV, Vi, VIII), deren Tangenten parallel zu den Neigungsflächen (33) sind, und dass die vier Scheitelpunkte (I, III, V, VII) des Innenprofils (2) von den entsprechenden Seiten (31, 31') (32, 32') des Aussenprofils (3) in im wesentlichen gleichem Abstand ($d_2$) angeordnet sind.

**3.** Rohrförmiges Element nach Anspruch 2, dadurch gekennzeichnet, dass die vier Scheitelpunkte (I, III, V, VII) und die vier Diagonalpunkte (II, IV, VI, VIII) von den entsprechenden Seiten des Aussenprofils in in etwa gleichgrossen Abständen angeordnet sind, damit die Seitenwand des Elements (1) im wesentlichen eine gleichmässige Stärke (d) über deren Umfang aufweist.

**4.** Rohrförmiges Element nach einem der Ansprüche 1 bis 3, dadurch gekennzeichnet, dass die relativen Breiten (L, l) der Parallelseiten (31, 31') (32, 32') und die Ausrichtung der Neigungsflächen (33) derart bestimmt werden, dass einerseits eine für die Stabilität ausreichende Auflagefläche und andererseits eine ausreichende Stärke über den gesamten Umfang optimal sichergestellt ist, um die Festigkeit für die beaufschlagten Belastungskräfte zu gewährleisten.

**5.** Rohrförmiges Element nach einem der Ansprüche 2 bis 4, dadurch gekennzeichnet, dass das Innenprofil (2) im Querschnitt gemäss einer durchgehenden gekrümmten Linie verläuft.

**6.** Rohrförmiges Element nach einem der Ansrpüche 2 bis 4, dadurch gekennzeichnet, dass das Innenprofil (2) im Querschnitt gemäss einer Vieleckline mit mindestens acht Seiten verläuft.

**7.** Rohrförmiges Element nach einem der vorhergehenden Ansprüche, dadurch gekennzeichnet, dass die grosse Achse (A) zur kleinen Achse (B) des Innenprofils (2) ein Verhältnis von 1,3 bis 2 aufweisen kann.

**8.** Rohrförmiges Element nach einem der vorhergehenden Ansprüche, dadurch gekennzeichnet, dass die vier Neigungsflächen (33) des Aussenprofils (3) mit der Richtung der grossen Achse (A) des Innenprofils (2) einen Winkel zwischen 30° und 50° bilden.

**9.** Verfahren zur Ausführung eines vorgefertigten, rohrförmigen Leitungsbau-Elementes durch Vergiessen eines formbaren Materials, wie Beton in einer durch eine Aussenschalung und durch einen Innendorn begrenzte Form, wobei das rohrförmige gegossene Element einen Rohrschaft (1) mit einer auf dem Innendorn bzw. auf der Aussenschalung verschalten Innenfläche (2) bzw. Aussenfläche (3), die zu zwei senkrecht zueinander durch die Längsachse verlaufenden (O) Ebenen symmetrisch sind, und wobei die Innenfläche (2) im Querschnitt quer zur Achse (O) ein insgesamt ovales Profil mit zwei jeweils gemäss den beiden Symmetrieebenen P1, P2 ausgerichteten ungleichen Achsen, eine grosse Achse (A) und eine kleine Achse (B), aufweist, dadurch gekennzeichnet, dass die Aussenschalung aus mindestens acht ebenen Tafelschalungen besteht, die eine prismatische Oberfläche mit polygonalem Querschnitt begrenzen, so dass die Aussenfläche (3) des Gusselementes zwei zur grossen Achse (A) des Innenprofils (2) parallele und in einem Abstand (Y) voneinander angeordnete Grundflächen mit einer Breite L, zwei kleine zur kleinen Achse (B) parallele und in einem Abstand (X) voneinander angeordnete Grundflächen (32, 32') mit einer Breite l, und vier zu diesen Achsen schräg geneigte Wandflächen (33) aufweist, wobei die Abstände (X), (Y) zwischen den Parallelflächen unterschiedlich sind.

**10.** Ausführungsverfahren eines rohrförmigen Elementes nach Anspruch 9, dadurch gekennzeichnet, dass zur Bestimmung im Querschnitt der Profile des Innendorns und der Aussenschalung zuerst die Abmessungen (A) der grossen Achse und (B) der kleinen Achse des elliptischen Innenprofils entsprechend der zu erzielenden Hydraulikkapazität und des zur Verfügung stehenden Platzes mindestens in der vertikalen und der horizontalen Richtung unter Berücksichtigung der der Wand (1) zu gebenden Stärke des Betons (d) gewählt werden, dann die Abstände (X), (Y) der zu den Symmetrieebenen (P1, P2) senkrechten Planflächen (32, 31), dann die optimale Lage der schrägen Wandflächen (33) festgelegt werden, wodurch eine bestimmte, im wesentlichen konstante Stärke (d) der Seitenwand unter Beibehaltung einer minimalen Breite (L) der Auflagefläche (31), die mit der Festigkeit der Verlegungsfläche und der Stabilität der Kippbedingungen kompatibel ist, erhalten wird.

**11.** Ausführungsverfahren eines rohrförmigen Elementes nach Anspruch 10, dadurch gekennzeichnet, dass die Lage und die Ausrichtung der seitlichen Neigungsflächen für ein elliptisches Innenprofil mit einer grossen Achse (A) und einer kleinen Achse (B) derart bestimmt werden, dass die zur grossen Achse (A) parallele Breite (L) der grossen Basis (31) der Aussenfläche (3) und die zur kleinen Achse (B) parallele Breite (l) der kleinen Basis (32) in folgenden Intervallen liegen :

$$\frac{A}{2} - \frac{B}{10} < L < \frac{A}{2} + \frac{B}{3}$$

$$\frac{B}{2} - \frac{A}{20} < I < \frac{B}{2} + \frac{A}{12}$$

12. Verfahren zur Ausführung modularer Rohrteile nach mindestens einem der vorhergehenden Ansprüche, dadurch gekennzeichnet, dass eine Reihe elliptischer Querschnitte S1, S2, S3 ... mit unterschiedlichen Flächen festgelegt wird, die jeweils A1, A2, A3 ... als grosse Achse und jeweils B1, B2, B3 ... als kleine Achse aufweisen, und dass mindestens zwei Modelle von Elementen mit den Querschnitten S1, S2 in ein und der selben Form gefertigt werden, wobei diese eine durch acht vertikale Wände begrenzte Aussenschalung mit oktogonalem Querschnitt und einen Innendorn mit elliptischem Querschnitt umfasst, und dass der Übergang vom Typ S1 mit kleinerem Querschnitt zum Typ S2 mit grösserem Querschnitt durch Erweiterung mindestens einiger Schalungswände der Aussenfläche (3) erfolgt.

13. Verfahren zur Ausführung modularer Rohrteile nach Anspruch 12, dadurch gekennzeichnet, dass zum Übergang von einem Querschnitt S1 zu einem grösseren Querschnitt S2 nur die Schalungswände der grossen und der kleinen Basis unter Beibehaltung, von einem Querschnitt zum anderen, derselben Breite und derselben Ausrichtung der Schalungswände der schrägen Wandflächen erweitert werden.

14. Verfahren zur Ausführung von modularen Rohrelementen nach Anspruch 13, dadurch gekennzeichnet, dass zur Fertigung einer Reihe modularer Elemente mit Durchgangsquerschnitten S1, S2, S3 .... zuerst eine in den beiden Symmetrieebenen (P1, P2) zu erhaltende Wandstärke gewählt wird, dann das elliptische Innenprofil und das achteckige Aussenprofil des Modells (5) mit dem kleinsten Durchgangsquerschnitt S1 bestimmt wird, dessen Innenprofil (5) eine grosse Achse A1 und eine kleine Achse B1 aufweist, und dessen Aussenprofil (50) eine grosse Basis (51) mit einer Breite L1, eine kleine Basis (52) mit einer Breite 11 und schräge Wandflächen (53) mit einer Breite E umfasst, und dass zum Vergiessen von Elementen mit einem gegenüber dem Querschnitt S1 grösseren Querschnitt Sn der Innendorn und die dem Querschnitt S1 entsprechende Aussenform vergrössert wird, indem der Innendorn den Querschnitt Sn mit der grossen Achse An und der kleinen Achse Bn erhält und die Tafelschalungen der Aussenform durch Hinzusetzen von zusätzlichen Tafelschalungen mit den Breiten L'n = An - A1 und l'n = Bn - B1 erweitert wird, damit die grosse Basis eine Breite Ln = L1 + L'n und die kleine Basis eine Breite ln = 11 + l'n aufweist, wobei die Tafelschalungen der schrägen Wandflächen dieselbe Breite und dieselbe Ausrichtung behalten.

15. Verfahren nach Anspruch 14 zur Fertigung modularer Rohrteile, dadurch gekennzeichnet, dass man vom kleinsten Querschnitt S1 zu einem grösseren Querschnit wie S2, S3 usw. ... durch Vergrösserung der Aussenschalung unter Hinzufügung von Schalungstafeln mit folgenden Breiten übergeht :
L'2 = A2 - A1 und l'2 = B2 - B1 für den Querschnitt S2,
L'3 = A3 - A1 und l'3 = B3 - B1 für den Querschnitt S3 und so weiter, solange die erzielten Breiten Ln für die grosse Basis und ln für die kleine Basis mit den Achsen An und Bn des Durchgangsquerschnittes Sn kompatibel sind.

16. Verfahren zur Fertigung eines rohrförmigen Elementes nach einem der vorhergehenden Ansprüche, durch Vergiessen von Beton in einer Form, die durch eine Aussenschalung und einen aus einem zylinderförmigen Dorn bestehenden Innendorn begrenzt ist, wobei eine Metallbewehrung (4) vor dem Betonverguss in dieser Form angeordnet wird, dadurch gekennzeichnet, dass ein zylinderförmiges Gitter (4) mit einem entsprechend der auszuführenden internen (2) und externen (3) Profile des rohrförmigen Elementes (1) vorgesehenen elliptischen Querschnitt gefertigt wird, und dass diese Stahleinlage aus Längsstäben (42) zusammen mit spiralförmigen Rundbewehrungen besteht und durch Wickeln gefertigt wird.

17. Verfahren zur Ausführung eines Elementes nach Anspruch 16, dadurch gekennzeichnet, dass die Stahleinlage (4) in der Käfigwickelmaschine vorgefertigt, dann in die Form eingeschoben wird.

18. Verfahren zur Ausführung eines Elementes nach Anspruch 16, dadurch gekennzeichnet, dass eine Stahleinlage (3) mit kreisrundem Querschnitt gefertigt wird, die dann zur Erzielung der gewünschten elliptischen Form in der Presse ovalisiert wird.

FIG.1

FIG.2a

FIG.2b

FIG.3

TABLEAU I

| B | A | $k = \dfrac{A}{B}$ | $S = \dfrac{\pi A.B}{4}$ | Diamètre correspondant |
|---|---|---|---|---|
| 750 | 1150 | 1,53 | 0,677 | 0,928 |
| 1000 | 1650 | 1,65 | 1,295 | 1,284 |
| 1150 | 1850 | 1,69 | 1,761 | 1,407 |
| 1250 | 2150 | 1,72 | 2,110 | 1,639 |
| 1500 | 2650 | 1,76 | 3,122 | 1,993 |
| 1800 | 3250 | 1,805 | 4,594 | 2,418 |
| 2000 | 3650 | 1,825 | 5,733 | 2,701 |

FIG. 4

TABLEAU II

| Section | B | A | L | | l | | $B_0$= 650 $A_0$=1150 | | $B_0$=1000 $A_0$=1650 | | $B_0$=1150 $A_0$=1950 | | $B_0$=1250 $A_0$=2150 | | $B_0$=1500 $A_0$=2650 | | $B_0$=1800 $A_0$=3250 | |
|---|---|---|---|---|---|---|---|---|---|---|---|---|---|---|---|---|---|---|
| | | | mini | maxi | mini | maxi | L' | l' | L' | l' | L' | l' | L' | l' | L' | l' | L' | l' |
| $S_1$ | 750 | 1150 | 500 | 825 | 317,5 | 470 | — | — | — | — | — | — | — | — | — | — | — | — |
| $S_2$ | 1000 | 1650 | 725 | 1158 | 417,5 | 637 | 500 | 250 | — | — | — | — | — | — | — | — | — | — |
| $S_3$ | 1150 | 1950 | 860 | 1358 | 477,5 | 737,5 | 800 | 400 | 300 | 150 | — | — | — | — | — | — | — | — |
| $S_4$ | 1250 | 2150 | 950 | 1491 | 517,5 | 804 | 1000 | 500 | 500 | 250 | 200 | 100 | — | — | — | — | — | — |
| $S_5$ | 1500 | 2650 | 1175 | 1825 | 617,5 | 971 | 1500 | 750 | 1000 | 500 | 700 | 350 | 500 | 250 | — | — | — | — |
| $S_6$ | 1800 | 3250 | 1445 | 2225 | 737,5 | 1171 | 2100 | 1050 | 1600 | 800 | 1300 | 450 | 900 | 550 | 600 | 300 | — | — |
| $S_7$ | 2000 | 3650 | 1625 | 2983 | 817,5 | 1304 | 2500 | 1250 | 2000 | 1000 | 1700 | 850 | 1500 | 750 | 1000 | 500 | 400 | 200 |

FIG.5

EP 0 508 875 B1